# EUROPÄISCHE PATENTANMELDUNG

(11) **EP 1 312 905 A2**
(43) Veröffentlichungstag der Anmeldung: **21.05.2003**
(21) Anmeldenummer: 02016525.4
(22) Anmeldetag: 24.07.2002
(51) Int. Cl.: G01L 1/22

(54) **Verfahren zur Herstellung von Verformungssensoren mit einem Dehnungsmessstreifen sowie zur Herstellung von Dehnungsmessstreifen und Verformungssensoren sowie Dehnungsmessstreifen**

(30) Priorität: 16.11.2001 DE 10156406
(71) Anmelder: ROBERT BOSCH GMBH, 70442 Stuttgart (DE)
(72) Erfinder: Artmann, Hans, 71106 Magstadt (DE); Flik, Gottfried, 71229 Leonberg (DE); Heyers, Klaus, 72766 Reutlingen (DE)

(57) **Zusammenfassung**

Es wird ein Verfahren zur Herstellung von Verformungssensoren mit einem Dehnungsmessstreifen (30) vorgeschlagen, der elektrische Strukturen zur Detektion einer Verformung aufweist und auf einem Oberflächenabschnitt des Verformungssensors aufgebracht ist. Erfindungsgemäß wird ein Oberflächenbereich eines Halbleiterwafers in einer vorgegebenen Dicke porösiziert. Anschließend werden auf der porösizierten Schicht zumindest ein Teil der zur Detektion einer Verformung notwendigen elektrischen DMS-Strukturen einer Vielzahl von DMS-Strukturen aufgebracht und vom Halbleiterwafer an der porösizierten Schicht als Sollbruchstelle abgetrennt. Abschließend werden die abgetrennten DMS-Strukturen mit jeweils einem Oberflächenabschnitt von Verformungssensoren verbunden. Gegenstand der Erfindung ist auch das Verfahren zur Herstellung der Dehnungsmessstreifen (30) sowie ein Verformungssensor und ein Dehnungsmessstreifen.

## Beschreibung

Die Erfindung betrifft ein Verfahren zur Herstellung von Verformungssensoren mit Dehnungsmessstreifen sowie zur Herstellung von Dehnungsmessstreifen nach dem Oberbegriff des Anspruchs 1 und einen Verformungssensor sowie einen Dehnungsmessstreifen.

### Stand der Technik

Für z.B. die Anwendung in Diesel Common-Rail Einspritzsystemen besteht ein Bedarf an Verformungssensoren zur Druckmessung im Bereich bis zu ca. 2000 bar. Hierzu werden im Allgemeinen Stahlzylinder mit einer Membranendfläche mit vorgegebener Dicke verwendet. Die Wölbung dieser Membran in Folge einer Druckbeaufschlagung wird im Allgemeinen durch Dehnungsmessstreifen (DMS) vorzugsweise resistiv erfasst, die geeignet auf der Membran aufgebracht sind.

Für die Herstellung der DMS sind zwei verschiedene Verfahren denkbar:

Entweder direkte Herstellung der DMS auf der Stahlmembran oder separate Herstellung der DMS und anschließende Montage auf die Stahlmembran.

An die Langzeitstabilität der Membran und des DMS werden sehr hohe Anforderungen gestellt, so dass sich hierfür nur Verfahren eignen, die eine hohe Genauigkeit und Reproduzierbarkeit garantieren, wie z.B. Verfahren, die an die Halbleiterfertigung angelehnt sind. Da diese Verfahren regelmäßig hohe Anforderungen an die Ebenheit und chemischphysikalische Beschaffenheit (Rauhigkeit-, Oxid- und Verunreinigungsfreiheit, etc.) der zu bearbeitenden Oberflächen stellen, ist die Anwendung dieser Prozesse auf einzelne Stahlmembranen vergleichsweise aufwendig. Insbesondere geht eine Schlüsseleigenschaft der Halbleiter-Fertigungsprozesse, die Möglichkeit der Batch-Fertigung, verloren und kann nur künstlich durch die Verwendung von Werkstückträgern realisiert werden. Das macht das Verfahren jedoch wieder aufwendiger.

Alternativ ist es möglich, die DMS separat herzustellen und dann mit einer geeigneten Verbindungstechnik mit der Membran des Sensors zu verbinden. Bei einem solchen Prozess müssen jedoch dünne DMS-Substrate während der Herstellung der DMS-Strukturen gehandhabt werden.

### Aufgabe und Vorteile der Erfindung

Der Erfindung liegt die Aufgabe zugrunde, verbesserte Verformungssensoren, insbesondere Hochdrucksensoren bereitzustellen, bei welchen auf einen Membranabschnitt der Verformungssensoren separat hergestellte DMS aufgebracht sind.

Diese Aufgabe wird durch die Merkmale der Ansprüche 1, 15, 17 und 18 gelöst.

In den Unteransprüchen sind vorteilhafte und zweckmäßige Weiterbildungen der Erfindung angegeben.

Die Erfindung geht zunächst von einem Verfahren zur Herstellung von Verformungssensoren mit einem Dehnungsmessstreifen (DMS) aus, der elektrisch leitende Strukturen zur Detektion einer Verformung aufweist und auf einem Oberflächenabschnitt des Verformungssensors aufgebracht ist. Der Kern der Erfindung liegt nun darin, dass ein Oberflächenbereich eines Halbleiterwafers in einer vorgegebenen Dicke porösiziert wird, dass auf der porösizierten Schicht zumindest ein Teil der zur Detektion einer Verformung notwendigen elektrischen DMS-Strukturen für mehrere DMS aufgebracht und vom Halbleiterwafer an der porösizierten Stelle als Sollbruchstelle abgetrennt werden, und dass die abgetrennten DMS-Strukturen mit den Oberflächenabschnitten der Verformungssensoren verbunden werden. Auf diese Weise lassen sich die DMS im Waferverbund und damit batchfähig komplett durch Standardhalbleiterprozesse und auf Standardhalbleiter-Equipment gestützt, herstellen. Dadurch lässt sich eine deutliche Kostenreduktion verglichen mit einem Spezialprozess für die direkte Prozessierung auf z.B. einer Stahlmembran eines Hochdrucksensors erzielen. Gleichzeitig ist die Prozess- und Materialvielfalt, die bei Halbleiterprozessen zur Verfügung stehen (z.B. thermische Oxidation, pn-Übergänge etc.), komplett nutzbar. Die Herstellungstemperaturen bei elektrisch leitenden Strukturen, beispielsweise Siliziumwiderstände, liegen normalerweise über 1000° C, wodurch eine hohe Langzeitstabilität damit erzeugter Strukturen erwartet werden kann. Die Herstellung der sehr dünnen DMS-Strukturen (die Dicke liegt vorzugsweise im Bereich von 1 bis 20 µm) erfolgt durch Abspalten der entsprechenden Schicht von der Oberfläche des Halbleiterwafers an der Sollbruchstelle, die durch die bekannte Technik der Herstellung von porösem Silizium realisiert wird. Dadurch kann diese Abtrennung bei Raumtemperatur unter bestimmten Randbedingungen unter Verzicht auf weitere Ätzlösungen erfolgen. Bei der Herstellung von porösen Halbleitern, insbesondere porösem Silizium, wird in der Regel eine elektrochemische Reaktion zwischen Flusssäure und Silizium genutzt, bei der eine schwammartige Struktur im Silizium erzeugt wird. Der Siliziumhalbleiterträger, in der Regel ein Siliziumwafer, muss hierzu gegenüber einem Flusssäureelektroyt anodisch gepolt sein. Durch elektrochemisches Ätzen des Siliziums (Anodisieren) in beispielsweise einem Gemisch aus Flusssäure/Äthanol wird poröses Silizium durch teilweises Ätzen in die Tiefe erzeugt. In Abhängigkeit der Prozessparameter lassen sich Poren in der Größenordnung von einigen Nanometern bis einigen Mikrometern mit unterschiedlicher Porösizität herstellen.

Durch die erfindungsgemäße Fertigung von DMS-Elementen mittels Halbleiterprozessen eröffnet sich darüber hinaus die Möglichkeit eine Hochtemperaturstabilisierung der DMS zur Driftminimierung zu realisieren. Außerdem lassen sich durch die Verwendung bekannter Halbleitertechniken Schichtdicken der DMS vergleichsweise genau einstellen. Z.B. kann Silizium in einem epitaktischen Dampfphasenprozess im Hinblick auf die Schichtdicke ausreichend genau deponiert werden.

Die poröse Halbleitertechnik lässt sich bevorzugt bei Halbleiterwafern aus Silizium oder Siliziumkarbid anwenden.

Um das Abtrennen von DMS-Strukturen vom Siliziumwafer zu verbessern, wird darüber hinaus vorgeschlagen, dass durch eine bekannte Einstellung von Herstellungsparametern in die porösizierte Schicht eine höher porösizierte Schicht eingebettet wird. Diese höherporösizierte Schicht stellt dann die Sollbruchschicht dar.

Z.B. kann durch Variation der Stromdichte während des Prozesses eine hochporöse Sollbruchschicht in weniger poröse und damit stabilere Schichten eingebettet werden.

Um bei nachfolgenden Hochtemperaturschritten eine Umordnung der porösizierten Schicht und damit eine Schwächung der Sollbruchstelle zu vermeiden, kann die porösizierte Schicht wenigstens teilweise oxidiert bzw. mit einer Oxidationsschicht überzogen werden. Die Tendenz der Umordnung der porösizierten Schicht bei nachfolgenden Hochtemperaturschritten kann jedoch auch ausgenutzt werden, um gezielt die Porengröße der porösizierten Schicht zu erhöhen, um ein leichtes mechanisches Abtrennen der nachfolgenden Schichten zu ermöglichen. Der Aufwand zur Trennung der Schichten wird damit reduziert. Die mechanische Stabilität darf jedoch nicht so weit absinken, dass ein ungewolltes Abtrennen der Schichten während des Prozesses stattfindet.

Bei einer bevorzugten Ausführungsform wird nach der porösizierten Schicht monokristallines oder polykristallines Halbleitermaterial, vorzugsweise Silizium, deponiert. Dies stellt die eigentliche aktive Schicht des DMS dar und liegt in einem Bereich von 1 bis 20 µm, vorzugsweise 1 bis 10 µm. Wird monokristallines Silizium aufgewachsen, so ist eine selektive Entfernung der Reste des porösen Siliziums nicht möglich und die Schichtdickenhomogenität der DMS-Schicht wird durch einen gegebenenfalls erforderlichen Polierschritt begrenzt. Wird jedoch Polysilizium (z.B. epi-poly) auf eine Oxidzwischenschicht deponiert, so können eventuelle Reste selektiv vom Polysilizium entfernt werden, womit höchste Schichtdickenhomogenität erreichbar sind. Bei einer Polysiliziumschicht muss jedoch eine geringe Empfindlichkeit des Sensors aufgrund des geringeren K-Faktors (....) von Polysilizium in Kauf genommen werden.

Anschließend können in einer derart hergestellten Schicht Widerstandsbereiche, z.B. mittels Ionenimplantationen oder Diffusion definiert werden. Vorzugsweise werden dazu Dotierstoffe eingesetzt, die komplementär zum gegebenen Fall vordotierten Substrattyp sind.

In einer ebenso bevorzugten Ausführungsform lassen sich die Widerstandsbereiche auch durch eine Metalldeposition auf eine Isolierschicht realisieren.

Zur Erhöhung der elektrischen Isolationswirkung können auch pn-Übergänge an den Rändern und in der Tiefe der DMS-Struktur erzeugt werden.

In einer bevorzugten Ausgestaltung der Erfindung werden die DMS-Strukturen vor dem Abtrennen mit einem Halteelement, z.B. einer Glasplatte oder einem Wafer beispielsweise mit Epoxi-Kleber verbunden. Dieses Halteelement dient dem Handling der dünnen DMS-Schicht nach erfolgtem Ablöseschritt vom Wafer.

Die abgetrennten DMS-Strukturen können mit dem Haltelement in Gruppen von DMS-Strukturen oder einzelne DMS-Strukturen zerteilt, z.B. zersägt werden. Die einzelnen DMS-Strukturen lassen sich beispielsweise in einem Pick- and Place-Verfahren auf jeweilige Oberflächenabschnitte von Verformungssensoren aufbringen.

Alternativ können jedoch auch mehrere DMS-Strukturen oder alle DMS-Strukturen mit Halteelement auf entsprechend positionierte Oberflächenabschnitte von Verformungssensoren am Stück, d.h. noch unzerteilt aufgebracht werden.

In einer bevorzugten Ausgestaltung der Erfindung wird zum Verbinden von DMS-Strukturen mit Oberflächenabschnitten von Verformungssensoren auf wenigstens eine zu verbindende Oberfläche niedrig schmelzendes Glas (Sealglas) aufgebracht und die zusammengefügte Anordnung erwärmt. Hierdurch lässt sich eine innige Verbindung aus DMS und Oberfläche des Verformungssensors, z.B. Membranoberfläche, erreichen.

Nachdem die Verbindung von DMS und Oberfläche des Verformungssensors erfolgt ist, wird das Haltelement von der DMS-Struktur bzw. den DMS-Strukturen entfernt. Bei einer Verbindung von DMS-Struktur und Halteelement mittels Epoxi kommt z.B. eine Entfernung mit Hilfe von Salpetersäure in Frage, in welcher der Epoxi-Kleber gelöst wird.

Als Verformungssensoren sind Druck, insbesondere Hochdrucksensoren mit entsprechenden Membranen, jedoch auch Kraft- oder Momentensensoren denkbar.

Die Erfindung bezieht sich nicht nur auf das komplette Verfahren zur Herstellung von Verformungssensoren mit Dehnungsmessstreifen, sondern auch auf das darin enthaltene Verfahren zur Herstellung eines Dehnungsmessstreifens mit den oben stehenden Merkmalen und Vorteilen.

### Zeichnungen

Die Erfindung soll durch die nachstehenden Zeichnungen verdeutlicht und unter Angabe weiterer Vorteile und Einzelheiten näher erläutert werden. Es zeigen
- Figur 1 a bis h: jeweils in einem schematischen Schnittbild den Prozessablauf zur Herstellung eines Hochdrucksensors mit einem DMS, der auf einem Siliziumwafer aufgebaut und anschließend davon abgetrennt wurde,
- Figur 2: in einem schematischen Schnittbild die Positionierung von fertiggestellten DMS auf Stahlkörpern von Hochdrucksensoren,
- Figur 3: ebenfalls in einem schematischen Schnittbild einen auf einem Stahlkörper eines Hochdrucksensors aufgebrachte DMS und
- Figur 4: in einer sehr vereinfachten Seitenansicht den Verbindungsvorgang von DMS mit entsprechenden Stahlkörpern von Hochdrucksensoren.

### Beschreibung der Ausführungsbeispiele

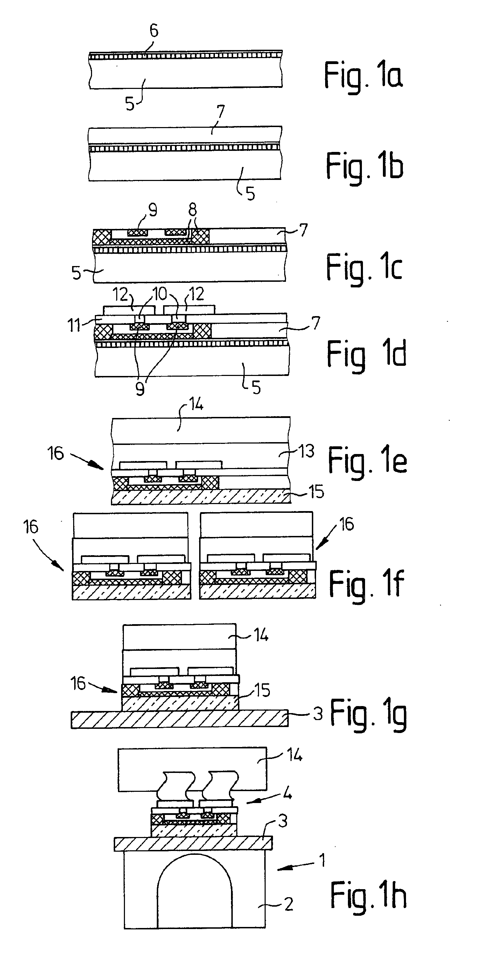

Figur 1a bis 1h zeigt in jeweils sehr vereinfachten Schnittbildern die Entstehung eines Hochdrucksensors 1, bei welchem auf einem Stahlkörper 2 mit endseitiger Membran 3 ein Dehnungsmessstreifen (DMS) 4 aufgebracht ist (siehe Figur 1h).

In einem ersten Schritt wird mit einem bekannten Verfahren zur Herstellung von porösem Silizium auf z.B. einem Standardsiliziumwafer 5 (z.B. 6 Zoll) mit geeigneter Dotierung (z.B. < 10 Ωcm) in einem vorgegebenen Oberflächenbereich eine poröse Siliziumschicht 6 erzeugt (siehe Figur 1a).

Auf die porösizierte Schicht 6 wird z.B. eine Schicht 7 aus polykristallinem Silizium in beispielsweise einem Epitaxieverfahren aufgebracht. Die Dicke kann z.B. 1 bis 10 um betragen (siehe Figur 1b).

In der polykristallinen Siliziumschicht 7 lassen sich Widerstände 8, 9 beispielsweise durch Ionenimplantation erzeugen, und zwar nicht nur wie beispielhaft in Figur 1c dargestellt für eine DMS-Struktur, sondern für eine Vielzahl von DMS-Strukturen, die nebeneinander liegen.

Widerstände 9 können über Kontaktlöcher 10 in einer Passivierungsschicht 11 mittels einer entsprechend strukturierten Metallisierung 12 zur Ausbildung einer gewünschten DMS-Struktur kontaktiert werden (siehe Figur 1d).

Die soweit fertiggestellten DMS-Strukturen 16 werden auf der deponierten bzw. strukturierten Seite z.B. über einen Epoxi-Kleber 13 mit einem Halteelement 14 versehen. In einem darauffolgenden Schritt wird der Siliziumwafer 5 an der porösizierten Siliziumschicht 6 abgetrennt und die Trennoberfläche gegebenenfalls nach einer Einebnungsbehandlung mit Sealglas 15 versehen (siehe Figur 1e).

Anschließend können die Vielzahl von DMS-Strukturen 16 z.B. mittels sägen vereinzelt werden (siehe hierzu Figur 1f). Wie in Figur 1g symbolisch dargestellt, wird die mit Halteelement 14 und Sielglasschicht 15 versehende DMS-Struktur 16 als fertiger DMS 4 mit der Membran 3 des Hochdrucksensors 1 zusammengefügt und getempert, so dass das Sielglas 15 aufschmilzt und sich mit der Membran 3 verbindet.

Abschließend kann das Haltelement 14 mit Epoxi-Kleber 13 durch geeignete Lösungsmittel (z.B. Salpetersäure) entfernt werden, so dass lediglich der Stahlkörper 2 und die reine DMS 4 verbleiben (siehe hierzu symbolisierte Darstellung von Figur 1h).

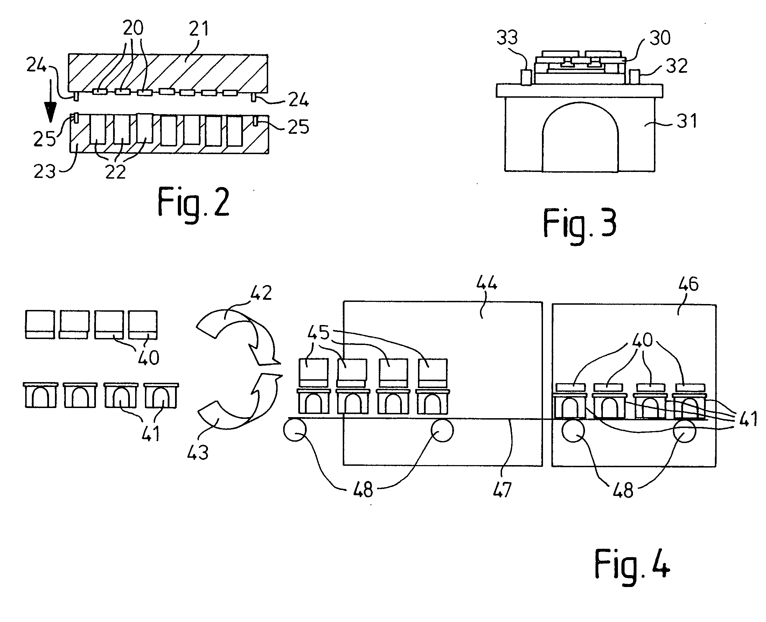

Das Verbinden von fertiggestellten Dehnungsmessstreifen kann auf verschiedene Arten erfolgen. Beispielhaft sind nachstehende zwei Möglichkeiten anhand von Figur 2 und 3 erläutert.

In Figur 2 ist vorgesehen, dass fertiggestellte Dehnungsmessstreifen 20 gegebenenfalls mit Halteelement an einem Werkstückträger 21 und Stahlkörper 22 über einen weiteren Werkstückträger 23 in geeigneter Magazinierung vorliegen. Wichtig ist die Einhaltung einer hohen Positioniergenauigkeit von vorzugsweise besser als 50µm beim Aufbringen der DMS 20 auf die Stahlkörper 22. Ein mögliches Verfahren zur Verbindung von DMS 20 und Stahlkörper 22 kann darin bestehen, dass die Werkstückträger 21, 23 über geeignete Positionierhilfen 24, 25 sich exakt zueinander positionieren lassen (siehe Figur 2).

Wie in Figur 3 alternativ dargestellt, können DMS 30 auch einzeln auf Stahlkörper 31 aufgebracht werden, wobei für eine exakte Positionierung Positionierhilfen 32, 33 vorgesehen werden können.

In Figur 4 soll das Zusammenfügen von fertiggestellten DMS 40 mit Stahlkörpern 41 von Hochdrucksensoren durch die symbolisch dargestellten Pfeile 42, 43 veranschaulicht werden. Nach dem Aufbringen der DMS 40 auf die Stahlkörper 41 wird z.B. in einem Durchlaufofen 44 ein Aufschmelzen der Lotverbindung und damit eine Verbindung von Stahlkörper 41 und DMS 40 erreicht. Nach der Abkühlung wird die Verbindung zu einem Halteelement 45, z.B. mittels einer Vorrichtung 46 zur HNO₃-Behandlung entfernt. Auch dieser Verfahrensschritt kann im Durchlauf erfolgen, was durch das stilisiert dargestellte Fließband 47 mit Rollen 48 verdeutlicht werden soll. Abschließend folgt vorzugsweise eine elektrische Kontaktierung mittels Drahtbondung zu einer Auswerteschaltung der DMS 40.

## Patentansprüche

1. Verfahren zur Herstellung von Verformungssensoren (1) mit einem Dehnungsmessstreifen (DMS) (4, 16, 20, 30, 40), der elektrische Strukturen (8, 9, 12) zur Detektion einer Verformung aufweist und auf einem Oberflächenabschnitt (3) des Verformungssensors (1) aufgebracht ist, **dadurch gekennzeichnet, dass** ein Oberflächenbereich (6) eines Halbleiterwafers (5) in einer vorgegebenen Dicke porösiziert wird, dass auf der porösizierten Schicht zumindest ein Teil der zur Detektion einer Verformung notwendigen elektrischen DMS-Strukturen (4, 16, 20, 30, 40) mehrerer DMS (4, 16, 20, 30, 40) aufgebracht und vom Halbleiter an der porösen Schicht (6) als Sollbruchstelle abgetrennt werden, und dass die abgetrennten DMS-Strukturen (4, 16, 20, 30, 40) jeweils mit einem Oberflächenabschnitt (3) von Verformungssensoren (1) verbunden werden.

2. Verfahren nach Anspruch 1, **dadurch gekennzeichnet, dass** als Halbleiterwafer (5) ein Silizium- oder Siliziumkarbidwafer verwendet wird.

3. Verfahren nach Anspruch 1 oder 2, **dadurch gekennzeichnet, dass** durch eine bekannte Einstellung von Herstellungsparametern in die porösizierte Schicht (6) eine höher porösizierte Schicht eingebettet wird.

4. Verfahren nach einem der vorhergehenden Ansprüche, **dadurch gekennzeichnet, dass** die porösizierte Schicht (6) wenigstens teilweise oxidiert bzw. mit einer Oxidhaut überzogen wird.

5. Verfahren nach einem der vorhergehenden Ansprüche, **dadurch gekennzeichnet, dass** während eines Hochtemperaturschritt das poröse Halbleitermaterial derart umstrukturiert bzw. umgeordnet wird, dass die Porengröße in einer Weise zunimmt, die ein leichtes Abtrennen einer nachfolgenden Lage ermöglicht.

6. Verfahren nach einem der vorhergehenden Ansprüche, **dadurch gekennzeichnet, dass** nach der porösizierten Schicht (6) monokristallines und/oder polykristallines Halbleitermaterial (7) deponiert wird.

7. Verfahren nach Anspruch 6, **dadurch gekennzeichnet, dass** in dem deponierten monokristallinen und/oder polykristallinen Halbleitermaterial (7) Widerstandsbereich (8, 9) definiert werden.

8. Verfahren nach Anspruch 6 oder 7, **dadurch gekennzeichnet, dass** nach der poly- und/oder monokristallinen Schicht eine Metallstruktur (12) aufgebracht wird.

9. Verfahren nach einem der vorhergehenden Ansprüche, **dadurch gekennzeichnet, dass** vor dem Abtrennen der DMS-Strukturen (4, 16, 20, 30, 40) diese auf der dem Halbleiterwafer gegenüberliegenden Seite mit einem Haltelement (14) verbunden werden.

10. Verfahren nach einem der vorhergehenden Ansprüche, **dadurch gekennzeichnet, dass** die abgetrennten DMS-Strukturen (4, 16, 20, 30 40) mit Halteelement (14) in Gruppen von DMS-Strukturen oder einzelne DMS-Strukturen zerteilt werden.

11. Verfahren nach einem der vorhergehenden Ansprüche, **dadurch gekennzeichnet, dass** mehrere DMS-Strukturen (4, 16, 20, 30, 40) mit Halteelement (14) auf entsprechend positionierte Oberflächenabschnitte (3) von Körpern (2, 22, 31, 41) von Verformungssensoren (1) unzerteilt am Stück aufgebracht werden.

12. Verfahren nach einem der vorhergehenden Ansprüche, **dadurch gekennzeichnet, dass** jeweils einzelne DMS-Strukturen (4, 16, 20 30, 40) auf Oberflächenabschnitte (3) von Körpern (2, 22, 31, 41) aufgebracht werden.

13. Verfahren nach einem der vorhergehenden Ansprüche, **dadurch gekennzeichnet, dass** zum Verbinden von DMS-Strukturen (4, 16, 20, 30, 40) mit Oberflächenabschnitten (3) von Verformungssensoren (1) auf wenigstens eine zu verbindende Oberfläche niedrig schmelzendes Glas aufgebracht und die zusammengefügte Anordnung erwärmt wird.

14. Verfahren nach einem der vorhergehenden Ansprüche, **dadurch gekennzeichnet, dass** das Halteelement (14) nach dem Verbinden der DMS-Struktur (4, 16, 20, 30, 40) bzw. Strukturen entfernt wird.

15. Verfahren zur Herstellung eines Dehnungsmessstreifens (4) (DMS), der elektrisch leitende Strukturen (8, 9, 12) zur Detektion einer Verformung aufweist, **dadurch gekennzeichnet, dass** ein Oberflächenbereich (6) eines Halbleiterwafers (5) in einer vorgegebenen Dicke porösiziert wird, und dass auf der porösizierten Schicht (6) zumindest ein Teil der zur Detektion der Verformung notwendigen elektrischen DMS-Strukturen (16) aufgebracht und vom Halbleiterwafer (5) an der porösizierten Schicht (6) als Sollbruchstelle abgetrennt werden.

16. Verfahren nach Anspruch 15 mit weiteren Verfahrensschritten gemäß einem der Ansprüche 2 bis 10.

17. Verformungssensor 1, vorzugsweise Hochdrucksensor, **dadurch gekennzeichnet, dass** ein DMS (4) mit einem Oberflächenabschnitt (3) des Verformungssensors (1) mittels niedrig schmelzendem Glas verbunden ist.

18. Dehnungsmessstreifen (DMS) (4), der elektrisch leitende Strukturen (8, 9, 12) zur Detektion einer Verformung aufweist, **dadurch gekennzeichnet, dass** der Dehnungsmessstreifen (4) als einzig wesentliches Trägermaterial poly- öder monokristallines Halbleitermaterial in einer Dicke von 1 bis 20 µm aufweist.
